# EUROPEAN PATENT SPECIFICATION

(11) **EP 2 274 968 B1**
(45) Date of publication and mention of the grant of the patent: **30.05.2012**
(21) Application number: 10169819.9
(22) Date of filing: 16.07.2010
(51) Int. Cl.: A01B 59/00

(54) **A handle for a link, and a link of a three-point linkage**
Griff für einen Lenker und ein Lenker für eine Dreipunktverbindung
Poignée pour un bras et un bras d'un attelage à trois points

(30) Priority: 16.07.2009 IT BO20090459
(43) Date of publication of application: 19.01.2011
(73) Proprietor: CBM S.p.A., 41100 Modena (IT)
(72) Inventor: Cornia, Enrico Maria, 41100 Modena (IT)
(74) Representative: Provvisionato, Paolo

(56) References cited:
- DE-A1-102004 032 312
- DE-C1- 3 938 418
- FR-A- 1 148 609

## Description

The present invention relates to the field of three-point linkages for agricultural tractors, and more specifically to links for the lower arms.

In a three-point linkage, the lower arms are kept at a predetermined height by links which can be adjusted manually and locked in position by means of a handle.

A known manually adjustable link for a three-point linkage is essentially composed of a pair of screws, one having a right-hand thread and one having a left-hand thread, screwed into a common housing. The end of one screw is fixed to the rear structure of the tractor and the end of the other screw is fixed to a lower arm of the three-point linkage. More specifically, the screw connected to the lower arm is provided with a fork which is mounted on the lower arm in such a way that it can swing. The rotation of the housing in one or other direction causes the two screws to move towards or away from each other, consequently raising or lowering the lower arm to which the link is connected. The housing is rotated by turning the grips of what is known as a handle, which is fixed with respect to rotation on the housing, but which comprises a sleeve which can slide axially on it. In a resting position, the sleeve of the handle engages with an upper portion of the fork so as to prevent the accidental rotation of the sleeve. To adjust the link, an operator takes hold of one of the grips of the handle and raises it to release it from its engagement with the upper portion of the fork. The operator can then rotate the handle, and therefore the housing of the link, thus adjusting the link by lengthening or shortening it, consequently adjusting the height of the lower arm of the three-point linkage. At the end of the operation, when the lower arm of the three-point linkage has reached the desired height, the handle can be released so that it simply returns by gravity to the position in which it engages with the upper portion of the fork.

Such handles were initially made with a square-section tubular sleeve to which two lateral grips were welded. The tubular sleeve slid on the round housing and the square base of the tubular sleeve could engage with a corresponding projection formed on the upper portion of the fork. However, it was often found that the tubular sleeve could easily become filled with soil and detritus while the tractor was working on the land. The soil penetrated from the upper opening of the tubular sleeve into the free spaces between the square-section hole of the tubular sleeve and the round section of the housing, and collected in the base of the tubular sleeve, thus blocking and clogging the threads of the lower screw of the link and making it extremely difficult or even impossible to adjust the link subsequently.

Some time ago, the present applicant developed a handle with an improved shape in order to overcome this problem, the handle being made from cast iron in a shape which has a very small aperture in its upper part, which substantially matches the practically circular configuration of the housing. Additionally, an aperture was provided in a lateral position at the base of this known handle, to discharge any soil or other detritus that might accumulate within the tubular sleeve in spite of the small size of the upper aperture. This solution was a considerable improvement on the prior art, but over time it was found to have a number of drawbacks which made it desirable to develop a handle which was improved further.

One of the drawbacks of the known improved handle is its relative fragility and the difficulty of repairing it if it breaks. In some cases, the handle may suffer from impact or damage leading to the fracture of important components such as a grip or part of the element which engages with the upper part of the fork. In these cases, the handle has to be completely replaced in order to regain full functionality, with all the problems associated with the cost and time of procurement. The simplest solution would be to make an identical handle from a stronger material, such as steel, but such a handle made by casting would be too expensive. Other methods of making the handle from tubular sections are unfeasible because of their complexity and cost.

DE-A-102004032312 discloses a handle for a link for a three-point linkage produced from rolled sheet steel, which is suitably cut and shaped to form a guide which allows the handle to slide on the housing of the three-point linkage. In a variant, the handle is produced by joining together two rolled steel sheets which are suitably cut and shaped to form the aforesaid guide. This handle has a number of drawbacks, the most notable of which is the fact that the guide does not enclose the whole circular perimeter of the housing of the link of the three-point linkage as a tubular sleeve would, and the central protrusion of the guide is opposed to two protrusions separated in the longitudinal direction of the handle. The asymmetry of the guide of this known handle means that the movement of the handle on the housing is insufficiently precise, and it also gives rise to noise and jamming of the handle, making it inconvenient to use. Additionally, a user of this known handle must remember to release the handle from the drive pin, because, if this is not done, the function which prevents the unscrewing of the thread will not be provided.

DE-C-3 938 418 discloses a handle for a link for a three-point linkage having elongate apertures in the sleeve defining grooves which are kept clean from debris by teeth engaging the grooves.

In the present description, the term "tubular sleeve" denotes a body which is tubular and is therefore essentially closed over at least a larger part of its length in such a way that it substantially forms an axial hole or cavity which substantially opens at apertures located at the ends of the tubular bodies, and which can therefore substantially enclose, as a sleeve would, an elongate body in the axial hole. In the present description and in the claims, a configuration of this kind may also be referred to as a "tubular body" or a "tube".

It is known that a handle made in the form of a tubular sleeve, or with a tubular body, for a link of a three-point linkage provides the best performance in terms of noise-free operation without risk of jamming.

The object of the present invention is therefore to provide a handle for a link of a three-point linkage which is particularly resistant to impact, easily repairable, and simple and economical to produce. Another object of the invention is to provide a handle for a link for a three-point linkage which has good resistance to the ingress of soil and detritus, and which also permits the convenient discharge of any soil or detritus which may penetrate into the handle.

In order to achieve the above objects, the present invention proposes a handle for a link of a three-point linkage having the features indicated in the claims below. The invention also proposes a link for a three-point linkage having a handle as indicated above.

Advantageously, the handle according to the present invention is fully compatible with known links which are already in use, and more particularly with links which use cast-iron handles of the known type, which can therefore be conveniently replaced without the need to replace other components of the links.

According to an advantageous feature, the handle comprises discharge apertures located in the areas which are in the lowest position when the handle is in use, thus improving the cleanness of the handle, with a configuration which provides the best safeguard against the accumulation of any soil or detritus which may penetrate into the tubular sleeve.

An advantage of the handle according to the present invention arises from the fact that the grips are moved towards the upper part of the handle, above the discharge apertures, thus reducing the difficulties caused by the jamming of the handle when it is raised by a user before the adjustment operation is started.

Other features and advantages will become clear from the detailed description of a preferred embodiment of the invention, with reference to the appended drawings, provided purely for the purposes of reference, in which:
- Figure 1 is a partially exploded perspective view of a link for a three-point linkage with a handle according to the present invention,
- Figure 2 is a perspective view of a handle according to the present invention,
- Figure 3 is a perspective view of the handle of the present invention, taken in the direction of the arrow III of Figure 2,
- Figure 4 is a perspective view of the handle of the present invention taken at the angle shown by the arrow IV of Figure 2, to display the lower portion more clearly,
- Figure 5 is a cross section through the lower edge of the handle of Figure 2, which clearly shows the profile for engaging with the upper portion of a known type of link fork,
- Figure 6 is a perspective view of a known type of link form, on which a projection is formed to engage with the handle of Figure 2, and
- Figure 7 is a view taken in the direction of the arrow VII of Figure 6.

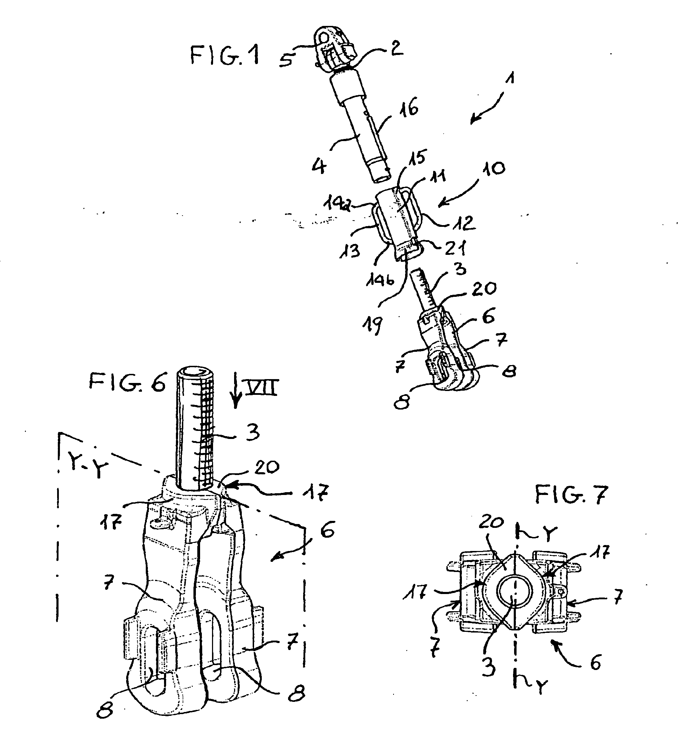

With reference to Figure 1, a link 1 for a three-point linkage of an agricultural tractor comprises a pair of screws 2 and 3, one having a right-hand thread and the other having a left-hand thread, which engage in an adjustment housing 4 which has corresponding internal threads. The ends of the screws 2 and 3 are connected in a known way to members which can be connected to the rear structure of the tractor and to a lower arm of the three-point linkage respectively. In greater detail, the upper screw 2 is connected to a known joint 5, while the lower screw 3 is fixed to a fork 6 having two sides 7 with corresponding slots 8 through which a pin (not shown) is passed in a known way to provide an articulated swinging connection of the link 1 to a lower arm of the three-point linkage.

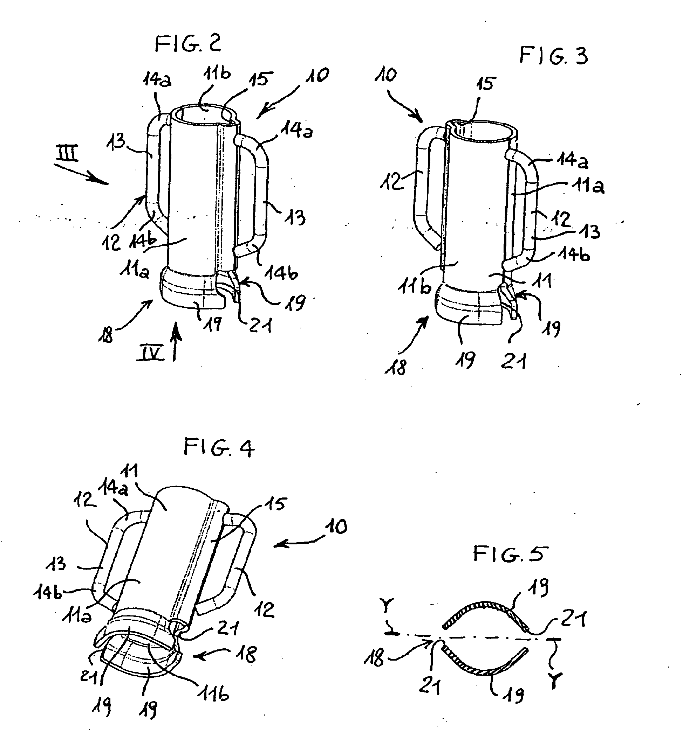

A handle 10 is mounted in an axially slidable way on the adjustment housing 4, the handle comprising, as shown more fully in Figures 2 to 4, a sleeve or tubular body 11 made from two semi-tubular parts 11a and 11b which are combined to form a tube, with an inner axial hole or cavity into which the adjustment housing 4 is inserted. Advantageously, the handle 10 is made from steel which is known to be stronger than the cast iron used for prior art handles, and which is easier to repair in case of damage or impact. The semi-tubular parts 11a and 11b are preferably symmetrical about a plane Y-Y (see Figure 5) and are made by pressing or other simple and economical methods, after which they are welded together. More generally, the sleeve or tubular body 11 can be formed from a number of complementary pieces, of which there may be more than two, which are welded together, for example by spot welding, braze welding, seam welding or other joining methods with the addition or fusion of material. It would also be possible to form the sleeve or tubular body 11 from a single piece of sheet steel, which is suitably shaped, bent and welded in an axial direction, parallel to the plane Y-Y, so as to form a tubular body into which the adjustment housing 4 is inserted.

Two grips 12 project from the sleeve or tubular body 11, each of these grips having a long and substantially straight portion 13 connected to the tubular sleeve 11 and spaced apart therefrom by an upper curved portion 14a fixed to the tubular sleeve 11 substantially at the junction between the semi-tubular parts 11a and 11b in an area close to the upper edge of the tubular sleeve 11. The other end of the straight portion 13 of each grip 12 terminates in a lower curved portion 14b which may or may not be fixed to the sleeve 11.

Over most of its length, the sleeve of tubular body 11 has a substantially circular cross section, except in the part which has a longitudinal channel 15 intended to be fitted on to a corresponding rib 16 formed on the housing 4 (see Figure 1) in such a way that the handle 10 is fixed with respect to rotation to the housing 4, but can slide axially along it. In its lower part, facing the fork 6, the tubular sleeve 11 of the handle 10 has a wider area 18 with two curved wings 19 substantially matching (see Figure 5) the similarly curved configuration of the sides 17 of an almond-shaped projection 20 formed on the upper part of the fork 6, as is clearly shown in Figures 6 and 7. The handle 10 can then be rotated in such a way that, in its resting position, when it is lowered in such a way that the enlarged area 18 comes in contact with the upper portion of the fork 6, the curved wings 19 engage with the sides 17 of the projection 20 so as to prevent accidental rotation of the handle 10. The rotation of the handle 10 into the position for engagement with the projection 20 is assisted by the relative arrangement of the grips 12 with respect to the curved wings 19 and to the projection 20 of the fork 6: this is because the natural inclined orientation of the link 1 is such that a user holds the handle 10 in the raised position by positioning one of the two handles in a substantially vertical plane, indicated by Y-Y in Figures 5 and 7, coinciding with the plane of symmetry of the tubular sleeve 11., of the curved wings 19 and of the projection 20 on the fork 6.

On the sides of the handle 10, in the enlarged area 18 and in axial alignment with the grips 12, in the plane Y-Y, there are formed two diametrically opposed gaps 21 (also referred to as bends or apertures), which extend upwards from the base of the tubular sleeve 11 towards the grips 12, over a height greater than the height of the projection 20 on the fork 6, in such a way that an aperture for communication between the outside and inside of the tubular body 11 is always left open, even when the handle 10 is engaged with the projection 20. Thus any soil or detritus that has accumulated in the tubular sleeve 11 can easily pass to the outside, being aided in this by the position of the gaps 21 in relation to the plane of symmetry Y-Y, which, in the resting position in which the handle 10 is engaged with the fork 6, is substantially vertical. This configuration is such that one of the two gaps 21 is always located at the lowest point of the tubular sleeve 11 when the handle is mounted on an inclined fork 1 as shown in Figure 1 and is in the resting position in which it is engaged with the corresponding fork 6. This encourages the discharge, simply by the action of gravity, of practically all the detritus that has accumulated in the tubular sleeve 11 of the handle 10.

The process of pressing the two semi-tubular parts 11a and 11b of the sleeve or tubular body 11 is such that they can conveniently be made in one piece with the enlarged area 18 which has the two curved wings 19, one for each semi-tubular part 11a, 11b, and with the gaps 21, which lie on the plane of symmetry Y-Y, which is also the plane of the junction of the two semi-tubular parts 11a, 11b.

The handle 10 according to the present invention acts in the same way as the prior art handles, and can be used to replace one of the latter, as it is fully compatible with the type of projection 20 on the forks of prior art links. In a resting position, the handle 10 is engaged with the fork 6, with the curved wings 19 enclosing most of the sides 17 of the projection 20. When the length of the link 1 has to be adjusted, an operator takes hold of the grip 12 which is facing the upper part of the link and uses it to raise the handle 10, thus releasing it from the engagement with the fork 6, in such a way that the handle 10 can be rotated about its longitudinal axis in order to rotate the housing 4 and thus adjust the length of the link of the three-point linkage.

Clearly, the handle according to the present invention can be varied and modified in many ways without departing from the innovative principle. For example, a person skilled in the art, who has understood the principles of the present invention from this description, will readily comprehend that the handle 10 can have a different number of grips, either less or more than the number described with reference to the preferred embodiment, and that the position of the handle can be different from that illustrated and described above. However, the arrangement of the handle as illustrated and described is considered to be particularly advantageous in that, on the one hand, it allows the gaps 21 to be correctly positioned in a direction which permits a more effective discharge of soil and detritus from inside the tubular sleeve 11, and, on the other hand, it prevents the tubular sleeve 11 from jamming on the housing 4 when the handle 10 is raised from the resting position, in which it is engaged with the fork 6, to a raised operating position, in which it is engaged with the housing 4 with respect to rotation. The risks of jamming are greatly reduced by the positioning of the grips 12, which are positioned as closely as possible to the top of the tubular sleeve 11.

Clearly, provided that the principle of the invention is retained, the features of its embodiment and the details of its application can be varied widely from what has been described and illustrated, without departure from the scope of the invention, as defined in the claims below, interpreted with reference to the description and the drawings.

## Claims

1. A handle for a link of a three-point linkage, comprising a tubular body (11) from which at least one grip (12) projects, the tubular body (11) being composed of at least two shaped complementary parts (11a, 11b) which are two semi-tubular parts which are symmetrical about a plane of symmetry (Y-Y), the handle comprising discharge apertures (21) positioned symmetrically about the plane of symmetry (Y-Y),
**characterized in that** the tubular body (11) comprises a lower enlarged shaped portion (18) for engagement, when in use, by means of a corresponding shaped engagement portion, the lower enlarged shaped portion (18) comprising two curved wings (19), each of which is formed in one piece with a corresponding semi-tubular part (11a, 11b), separated from each other to form the discharge apertures (21).

2. A handle according to Claim 1, **characterized in that** at least one of the grips (12) lies substantially in the plane of symmetry (Y-Y).

3. A handle according to Claim 2, **characterized in that** it comprises two grips (12), located on diametrically opposite parts of the tubular body (11), both grips substantially lying in the plane of symmetry (Y-Y).

4. A handle according to any one of preceding Claims, **characterized in that** it comprises two grips (12), located on diametrically opposite parts of the tubular body (11), both grips substantially lying in the plane of symmetry (Y-Y), the discharge apertures (21) being aligned with the grips on the plane of symmetry (Y-Y).

5. A handle according to any one or more of the preceding claims, **characterized in that** it is made from steel.

6. A link for a three-point linkage, comprising two screws (2, 3) engaged in a common housing (4), **characterized in that** it comprises a handle (10) according to any one or more of the preceding claims, mounted slidably on the housing (4) for the purpose of selectively rotating the latter.

7. A link for a three-point linkage according to Claim 6, **characterized in that** it comprises a fork (6) mounted on the end of one of the two screws (3), a shaped projection for engagement (20) being provided in the top part of the fork (6), the handle (10) comprising engagement means (18, 19) for engaging with the shaped engagement projection (20) of the fork (6).

## Patentansprüche

1. Handgriff für ein Verbindungsglied eines Dreipunktgestänges, der einen rohrförmigen Körper (11) umfasst, aus dem mindestens ein Griff (12) herausragt, wobei der rohrförmige Körper (11) aus mindestens zwei geformten, sich ergänzenden Teilen (11a, 11b) besteht, bei denen es sich um zwei Halbrohrteile handelt, die symmetrisch zu einer Symmetrieebene (Y-Y) angeordnet sind, wobei der Handgriff Ablauföffnungen (21) umfasst, die symmetrisch zu der Symmetrieebene (Y-Y) positioniert sind,
**dadurch gekennzeichnet, dass** der rohrförmige Körper (11) einen unteren vergrößerten geformten Abschnitt (18) umfasst, um im Gebrauch einen Eingriff mittels eines entsprechenden geformten Eingriffsabschnitts zu ermöglichen, wobei der untere vergrößerte geformte Abschnitt (18) zwei kurvenförmige Flügel (19) umfasst, die jeweils einteilig mit einem entsprechenden Halbrohrteil (11a, 11b) ausgebildet und voneinander getrennt sind, um die Ablauföffnungen (21) zu bilden.

2. Handgriff nach Anspruch 1, **dadurch gekennzeichnet, dass** mindestens einer der Griffe (12) im Wesentlichen in der Symmetrieebene (Y-Y) liegt.

3. Handgriff nach Anspruch 2, **dadurch gekennzeichnet, dass** er zwei Griffe (12) umfasst, die sich an diametral gegenüberliegenden Teilen des rohrförmigen Körpers (11) befinden, wobei beide Griffe im wesentlichen in der Symmetrieebene (Y-Y) liegen.

4. Handgriff nach einem der vorstehend aufgeführten Ansprüche, **dadurch gekennzeichnet, dass** er zwei Griffe (12) umfasst, die sich an diametral gegenüberliegenden Teilen des rohrförmigen Körpers (11) befinden, wobei beide Griffe im Wesentlichen in der Symmetrieebene (Y-Y) liegen, wobei die Ablauföffnungen (21) zu den Griffen in der Symmetrieebene (Y-Y) ausgerichtet sind.

5. Handgriff nach einem oder mehreren der vorstehend aufgeführten Ansprüche, **dadurch gekennzeichnet, dass** er aus Stahl gefertigt ist.

6. Verbindungsglied für ein Dreipunktgestänge, das zwei in einem gemeinsamen Gehäuse (4) eingreifende Gewindeschrauben (2, 3) umfasst, **dadurch gekennzeichnet, dass** es einen Handgriff (10) nach einem oder mehreren der vorstehend aufgeführten Ansprüche umfasst, der am Gehäuse (4) verschiebbar montiert ist, um das Letztere wahlweise drehen zu können.

7. Verbindungsglied für ein Dreipunktgestänge nach Anspruch 6, **dadurch gekennzeichnet, dass** es eine am Ende von einer der zwei Gewindeschrauben (3) montierte Gabel (6) umfasst, wobei ein geformter Eingriffsvorsprung (20) im oberen Teil der Gabel (6) vorgesehen ist, wobei der Handgriff (10) Eingriffsmittel (18, 19) für einen Eingriff mit dem geformten Eingriffsvorsprung (20) der Gabel (6) umfasst.

## Revendications

1. Poignée pour un lien d'un attelage à trois points, comprenant un corps tubulaire (11) à partir duquel saille au moins une prise (12), le corps tubulaire (11) étant composé d'au moins deux parties complémentaires profilées (11a, 11b) qui sont deux parties semi-tubulaires qui sont symétriques par rapport à un plan de symétrie (Y-Y), la poignée comprenant des orifices de dégagement (21) positionnés symétriquement par rapport au plan de symétrie (Y-Y),
**caractérisée en ce que** le corps tubulaire (11) comprend une portion profilée élargie inférieure (18) pour engagement, lors de l'utilisation, au moyen d'une portion d'engagement profilée correspondante, la portion profilée élargie inférieure (18) comprenant deux ailes courbées (19), chacune desquelles est formée en une pièce avec une partie semi-tubulaire correspondante (11a, 11b), séparées l'une de l'autre pour former les orifices de dégagement (21).

2. Poignée selon la revendication 1, **caractérisée en ce qu'**au moins une des prises (12) repose substantiellement dans le plan de symétrie (Y-Y).

3. Poignée selon la revendication 2, **caractérisée en ce qu'**elle comprend deux prises (12), situées sur des parties diamétralement opposées du corps tubulaire (11), les deux prises reposant substantiellement dans le plan de symétrie (Y-Y).

4. Poignée selon l'une quelconque des revendications précédentes, **caractérisée en ce qu'**elle comprend deux prises (12), situées sur des parties diamétralement opposées du corps tubulaire (11), les deux prises reposant substantiellement dans le plan de symétrie (Y-Y), les orifices de dégagement (21) étant alignés avec les prises sur le plan de symétrie (Y-Y).

5. Poignée selon l'une ou plusieurs quelconques des revendications précédentes, **caractérisée en ce qu'**elle est fait d'acier.

6. Lien pour un attelage à trois points, comprenant deux vis (2, 3) engagées dans un logement commun (4), **caractérisé en ce qu'**il comprend une poignée (10) selon l'une ou plusieurs quelconques des revendications précédentes, montée de manière coulissante sur le logement (4) dans le but de tourner sélectivement ce dernier.

7. Lien pour un attelage à trois points selon la revendication 6, **caractérisé en ce qu'**il comprend une fourchette (6) montée sur l'extrémité de l'une des deux vis (3), une projection profilée pour engagement (20) étant fournie dans la partie supérieure de la fourchette (6), la poignée (10) comprenant des moyens d'engagement (18, 19) pour s'engager avec la projection d'engagement profilée (20) de la fourchette (6),
